# EUROPÄISCHE PATENTSCHRIFT

(11) **EP 3 291 181 B1**
(45) Veröffentlichungstag und Bekanntmachung des Hinweises auf die Patenterteilung: **03.11.2021**
(21) Anmeldenummer: 16187273.4
(22) Anmeldetag: 05.09.2016
(51) Int. Cl.: G07C 3/00, B23Q 17/00

(54) **GERÄT UND SYSTEM ZUR ERFASSUNG VON BETRIEBSDATEN EINES WERKZEUGS**
DEVICE AND SYSTEM FOR DETECTING OPERATING DATA OF A TOOL
DISPOSITIF ET SYSTÈME DE DÉTERMINATION DE DONNÉES DE FONCTIONNEMENT D'UN OUTIL

(43) Veröffentlichungstag der Anmeldung: 07.03.2018
(73) Patentinhaber: Andreas Stihl AG & Co. KG, 71336 Waiblingen (DE)
(72) Erfinder: Ruß, Patrick, 70327 Stuttgart (DE); Roitsch, Tommy, 71334 Waiblingen (DE); Gurr, Kay-Steffen, 74078 Heilbronn (DE); Liebhard, Gernot, 71332 Waiblingen (DE); Sämann, Rudolf, 72336 Balingen (DE)
(74) Vertreter: Patentanwälte Ruff, Wilhelm, Beier, Dauster & Partner mbB

(56) Entgegenhaltungen:
- EP-A1- 2 801 445
- EP-A2- 1 973 077
- WO-A1-99/09637
- WO-A2-2007/072068
- US-A1- 2014 070 924
- US-A1- 2014 184 397
- LI JIAN ET AL: "A content-aware writing mechanism for reducing energy on non-volatile memory based embedded storage systems", DESIGN AUTOMATION FOR EMBEDDED SYSTEMS, AMSTERDAM, NL, vol. 17, no. 3 19 October 2014 (2014-10-19), pages 711-737, XP035461213, ISSN: 0929-5585, DOI: 10.1007/S10617-014-9150-9 [retrieved on 2014-10-19]

## Beschreibung

Die Erfindung betrifft ein Gerät zur Erfassung von Betriebsdaten eines Werkzeugs und ein System mit einem solchen Gerät und einem Werkzeug.

Aus der US 2014/0070924 A1 ist ein System zum Identifizieren eines Typs eines Elektrowerkzeugs bekannt. Das System weist ein Elektrowerkzeug mit einem elektrischen Motor auf. Des Weiteren weist das System ein Benutzungsanbaugerät konfiguriert zum Befestigen an dem Elektrowerkzeug auf. Außerdem hat das Benutzungsanbaugerät einen Sensor, der eine Benutzungscharakteristik des Elektrowerkzeugs erfasst und Benutzungsdaten für die erfasste Benutzungscharakteristik erzeugt. Weiter hat das Benutzungsanbaugerät einen Speicher, der die Benutzungsdaten erzeugt von dem Sensor speichert. Zudem hat das Benutzungsanbaugerät einen Sender, der die Benutzungsdaten erzeugt von dem Sensor sendet. Des Weiteren hat das Benutzungsanbaugerät einen Controller in Datenkommunikation mit dem Sensor, dem Speicher und dem Sender.

Aus der US 2015/0081359 A1 ist ein Flottenmanagementsystem bekannt, das eine Flotte, wie eine Landschaftsbau-Crew, ein Forstunternehmen, einen Bodenpflegemanager, oder dergleichen, bei der Verwaltung und der Überwachung der Sammlung von Outdoor-Kraftgeräten, wie Rasenmähern, Trimmern, Kettensägen, und/oder dergleichen, und die Bediener der Outdoor-Kraftgeräte unterstützt. In dieser Hinsicht sind Ausführungsformen auf Systeme und Verfahren gerichtet, um automatisch Daten über ein oder mehrere Teile von Outdoor-Kraftgeräten und einen oder mehrere menschliche Bediener der Geräte zu sammeln, die Daten in nützlichere Daten und Datenformate zu verarbeiten, und nützliches Feedback, Daten und Tools für Benutzer des Systems zur Unterstützung mit der Verwaltung einer oder mehrerer Flotten bereitzustellen. Im Detail kann ein Gerätedatensensor Daten periodisch erfassen und hat eine nicht-flüchtige Speichereinrichtung, wie beispielsweise einen Flash-Speicher-Stick, der die erfassten Daten in einer Zeitsequenz oder zusammen mit Zeitstempeln speichert, die den Zeitpunkt angeben, zu dem die Daten erfasst wurden.

Von Jian Li et al. ist ein Artikel mit dem Titel "A content-aware writing mechanism for reducing energy on non-volatile memory based embedded storage systems*"* bekannt.

Aus der EP 2 801 445 A1 ist eine Vorrichtung für ein motorgetriebenes Gerät umfassend eine Kommunikationseinheit, eine Datums-/Zeitinformationserfassungseinheit, und eine Kontrolleinheit bekannt. Die Kommunikationseinheit führt eine Kommunikation mit einer externen Vorrichtung durch, deren Datums-/Zeitinformation ein aktuelles Datum und eine aktuelle Zeit angeben. Die Datums-/Zeitinformationserfassungseinheit erfasst die Datums-/Zeitinformation von der externen Vorrichtung über die Kommunikationseinheit. Die Kontrolleinheit führt eine Kontrolle basierend auf der Datums-/Zeitinformation durch, die von der Datums-/Zeitinformationserfassungseinheit erfasst ist. Im Detail bestimmt eine Kontrollschaltung, wenn eine Abnormalität aufgetreten ist, dass ein Ereignis aufgetreten ist, das als Historie aufgezeichnet werden soll, und speichert entsprechende Historieinformation in einem nicht-flüchtigen Speicher.

Der Erfindung liegt die Aufgabe zugrunde, ein Gerät zur Erfassung von Betriebsdaten eines Werkzeugs und ein System zur Verfügung zu stellen, mittels derer eine zuverlässige und kostengünstige Betriebsdatenerfassung möglich ist, insbesondere über verschiedene Gerätetypen hinweg.

Die Erfindung löst diese Aufgabe durch ein Gerät zur Erfassung von Betriebsdaten eines Werkzeugs nach Anspruch 1 und ein System nach Anspruch 7.

Das Gerät ist zur Erfassung von Betriebsdaten eines Werkzeugs vorgesehen bzw. ausgebildet.

Das Werkzeug ist mittels eines Elektromotors und/oder mittels eines Verbrennungsmotors angetrieben. Das Gerät ist getrennt von dem Werkzeug vorgesehen und mit dem Werkzeug, beispielsweise mechanisch, koppelbar. Das Gerät kann beispielsweise lösbar mit dem Werkzeug mechanisch gekoppelt sein, beispielsweise indem es mit dem Werkzeug verschraubt, auf eine geeignete Stelle des Werkzeugs geklebt, mittels einer rastenden Verbindung mit dem Gerät gekoppelt oder in eine hierfür vorgesehene Kammer eingesetzt bzw. eingelegt wird.

Das Gerät zur Erfassung von Betriebsdaten eines Werkzeugs weist einen Sensor auf, der dazu ausgebildet ist, drahtlos, d.h. ohne eine galvanische Verbindung mit Komponenten des Werkzeugs, mindestens eine physikalische Messgröße zu erfassen, wobei die Messgröße von einem Betriebszustand des Werkzeugs abhängig ist.

Das Gerät weist weiter eine mit dem Sensor gekoppelte Auswerteeinrichtung auf, beispielsweise in Form eines Microcontrollers. Die Auswerteeinrichtung ist dazu ausgebildet, die mittels des Sensors erfasste Messgröße auszuwerten, um daraus die Betriebsdaten zu ermitteln bzw. abzuleiten.

Das Gerät weist weiter einen Betriebsdatenspeicher auf, der dazu ausgebildet ist, die Betriebsdaten zu speichern.

Das Gerät weist weiter eine Kommunikationsschnittstelle auf, beispielsweise in Form einer WLAN-Schnittstelle oder einer Bluetooth-Schnittstelle, die dazu ausgebildet ist, Betriebsdaten drahtlos zu einem Endgerät zu übertragen bzw. zu senden. Die Kommunikationsschnittstelle kann dazu ausgebildet sein, die Betriebsdaten drahtlos zu senden, unabhängig davon, ob sich ein Endgerät in Reichweite befindet oder nicht.

Das Endgerät kann beispielsweise basierend auf den empfangenen Betriebsdaten Auswertungen der Betriebsdaten vornehmen und diese beispielsweise einem Benutzer optisch aufbereitet darstellen.

Die Auswerteeinrichtung ist dazu ausgebildet, Betriebsdaten in Form einer Betriebsdauer des Werkzeugs zu ermitteln, während der der Elektromotor oder der Verbrennungsmotor aktiv ist. Mit anderen Worten dient der Sensor in Verbindung mit der Auswerteeinrichtung zur Betriebsstundenerfassung des Werkzeugs. Es versteht sich, dass es sich bei den Betriebsdaten neben den Betriebsstunden auch um weitere werkzeugbetriebsrelevante Daten handeln kann, beispielsweise um Antriebstemperaturen, Antriebsleistungen, Lastdaten, werkzeugbenutzerbezogene Daten, Ladezustände und/oder Spannungszustände eines Energiespeichers, Einsatzorte, usw.

Der Betriebsdatenspeicher ist ein flüchtiger Speicher, beispielsweise ein RAM (Random Access Memory). Das Gerät weist weiter einen nicht-flüchtigen Speicher auf, beispielsweise einen FLASH-Speicher. Das Gerät erfasst die Betriebsdaten periodisch mit einer Wiederholfrequenz bzw. Abtastrate, beispielsweise 1 Hz, und speichert die ermittelte Betriebsdauer in dem Betriebsdatenspeicher mit der Wiederholfrequenz. Das Speichern in dem Betriebsdatenspeicher kann unter der Bedingung erfolgen, dass sich die Betriebsdaten geändert haben, d.h. bei unveränderten Betriebsdaten, wie diese typisch bei nicht aktivem Werkzeug sind, kann das Speichern in dem Betriebsdatenspeicher entfallen. Das Gerät ist dazu ausgebildet, die ermittelte Betriebsdauer in dem nicht-flüchtigen Speicher zu speichern, sobald sich die ermittelte Betriebsdauer um mehr als einen vorgegebenen Schwellenwert verändert hat.

Für Betriebsdaten in Form der Betriebsdauer bzw. Betriebsstunden des Werkzeugs können beispielsweise die erfassten Betriebsstunden, sofern sie sich um einen beliebigen Wert größer als Null geändert haben, periodisch mit der Wiederholfrequenz bzw. Abtastrate in dem Betriebsdatenspeicher, beispielsweise in einer hierfür vorgesehenen Speicherzelle des Betriebsdatenspeichers, gespeichert werden. Erst wenn sich die erfassten Betriebsstunden um mehr als den vorgegebenen Schwellenwert, beispielsweise 1 Minute, geändert haben, werden die erfassten Betriebsstunden entsprechend aktualisiert in dem nicht-flüchtigen Speicher gespeichert, um beispielsweise im Falle eines Batteriewechsels den letzten erfassten Wert nicht zu verlieren bzw. nur einen geringen Messfehler zu verursachen. Dieses Vorgehen spart Energie und verlängert die Laufzeit eines elektrischen Energiespeichers bzw. einer Batterie, der bzw. die das Gerät mit Betriebsenergie versorgt, erheblich, da das Speichern in dem flüchtigen Speicher deutlich weniger Energie erfordert als das Speichern in dem nicht-flüchtigen Speicher.

In einer Ausführungsform ist der Sensor derart ausgebildet, dass er dazu in der Lage ist, unabhängig davon, ob das Werkzeug mittels eines Elektromotors oder eines Verbrennungsmotors angetrieben ist, die Messgröße zu erfassen. Erfindungsgemäß können folglich Messgrößen und damit auch Betriebsdaten, beispielsweise in Form von Betriebsstunden, für eine Vielzahl von Antriebstechnologien, wie beispielsweise verbrennungsmotorgetrieben, kabelgebunden, Akkumulator-basiert, mit demselben Gerät erfasst werden, ohne dass eine leitungsgebundene Verbindung mit dem Werkzeug notwendig ist.

In einer Ausführungsform ist der Sensor ein induktiver Sensor, beispielsweise eine Spule. Die Auswerteeinrichtung ist dann dazu ausgebildet, mittels des induktiven Sensors erzeugte Signale auszuwerten, um die Betriebsdaten zu ermitteln.

Mittels des induktiven Sensors ist es beispielsweise möglich, sich ändernde elektromagnetische und/oder magnetische Felder zu detektieren, beispielsweise verursacht durch Streufelder von Elektromotoren, Zündimpulse von Verbrennungsmotoren, Stromänderungen, sich bewegende Magnete in einem Schwungrad des Werkzeugs, eines Generators, etc. Auf diese Weise können die Betriebsdaten, insbesondere in Form von Betriebsstunden des Werkzeugs, zuverlässig und unabhängig von einem Antriebstyp des Werkzeugs erfasst werden, da die sich ändernden elektromagnetischen und/oder magnetischen Felder nur während des Betriebs des Werkzeugs entstehen. Die Auswerteeinrichtung kann beispielsweise eine Änderungsrate des elektromagnetischen Feldes auswerten und mit einem Referenzwert vergleichen, wobei für den Fall, dass die Änderungsrate des elektromagnetischen Feldes größer als der Referenzwert ist, die Betriebsdauer bzw. ein Betriebsstundezähler entsprechend erhöht wird.

Alternativ oder zusätzlich kann der Sensor ein akustischer Sensor sein, wobei die Auswerteeinrichtung mit dem akustischen Sensor gekoppelt ist und dazu ausgebildet ist, mittels des akustischen Sensors erzeugte Signale auszuwerten, um die Betriebsdaten zu ermitteln.

In einer Ausführungsform weist das Gerät einen elektrischen Energiespeicher auf, beispielsweise in Form einer Batterie, insbesondere in Form einer Knopfzelle. Weiter weist das Gerät elektrische, federnde Kontaktelemente auf, die dazu ausgebildet sind, korrespondierende elektrische Kontakte, insbesondere Kontaktflächen, des elektrischen Energiespeichers elektrisch zu kontaktieren. Weiter weist das Gerät ein Gehäuse auf, beispielsweise aus Kunststoff, das einen offenen und einen geschlossenen Zustand aufweisen kann. Im offenen Zustand des Gehäuses ist der elektrische Energiespeicher aus dem Gehäuse entnehmbar oder in das Gehäuse einsetzbar. Das Gehäuse ist derart korrespondierend zum elektrischen Energiespeicher geformt, dass der elektrische Energiespeicher im geschlossenen Zustand des Gehäuses mittels des Gehäuses und nicht mittels der elektrischen Kontaktelemente in Position gehalten ist. Die federnden Kontaktelemente werden im geschlossenen Zustand des Gehäuses aufgrund ihrer Federspannung gegen die korrespondierenden Kontakte bzw. Kontaktflächen gedrückt, um eine elektrische Kontaktierung mit geringem Übergangswiderstand zu bewirken. Die Federspannung dient hierbei jedoch lediglich zur optimalen elektrischen Kontaktierung, nicht jedoch zur mechanischen Fixierung des elektrischen Energiespeichers im Gehäuse. Mit anderen Worten übernimmt das Gehäuse aufgrund seiner Formgebung die Funktion der Fixierung des elektrischen Energiespeichers und die federnden Kontaktelemente übernehmen die Funktion der elektrischen Kontaktierung. Die Kontaktelemente können aus dem Gehäuse herausgeführt sein, um dort elektrisch mit korrespondierenden Anschlüssen, beispielsweise auf einer Platine, verbunden zu werden.

Das Gehäuse kann eine Kunststoffwanne zur Aufnahme des Energiespeichers aufweisen, durch die die elektrischen Kontaktelemente nach außen geführt sind. Das Gehäuse kann einen auf die Kunststoffwanne aufsetzbaren Deckel aufweisen. Das Gehäuse kann eine bestimmte Schutzklasse realisieren.

In einer Ausführungsform kann die Kommunikationsschnittstelle dazu ausgebildet sein, die Betriebsdaten fortlaufend drahtlos zu dem Endgerät zu übertragen. Beispielsweise kann die Kommunikationsschnittstelle dazu ausgebildet sein, nach einer bestimmten Anzahl n (n = 1, 2, ...) von Erfassungen bzw. Abtastungen der Betriebsdaten die Betriebsdaten unaufgefordert drahtlos zu dem Endgerät zu übertragen, um beispielsweise die Ortbarkeit des Geräts mittels einem Endgerät zu ermöglichen. Es kann ein festes oder ein veränderliches Zeitintervall zum Übertragen bzw. Senden verwendet werden.

Das erfindungsgemäße System weist ein oben beschriebenes Gerät und ein Werkzeug auf, das mittels eines Elektromotors oder eines Verbrennungsmotors angetrieben ist.

Der Elektromotor kann ein Universalmotor, oder ein bürstenbehafteter Gleichstrommotor, oder ein bürstenloser Gleichstrommotor, oder ein Drehstrommotor sein.

Das Werkzeug kann eine Motorsäge, oder eine Heckenschere, oder ein Laubbläser, oder ein Laubsauger, oder ein Rasenmäher, oder ein Freischneider, oder ein vergleichbares Werkzeug, insbesondere zur Landschaftspflege, sein. Das Werkzeug kann beispielsweise weiter ein Ackuschrauber oder eine Küchenmaschine, etc. sein.

Das System kann ein Endgerät aufweisen. Das Endgerät kann eine beliebige datenverarbeitende Einrichtung sein, die eine geeignete drahtlose Schnittstelle aufweist, die zur drahtlosen Kommunikation mit der Kommunikationsschnittstelle des Geräts zur Erfassung von Betriebsdaten ausgebildet ist.

Das Endgerät kann ein mobiles Endgerät sein, wie beispielsweise ein Mobiltelefon oder ein Tablet. Das Endgerät kann auch stationär sein. Beispielsweise kann das Endgerät ein Gateway bilden bzw. sein, das die empfangenen Betriebsdaten an einen Server weiterleitet, beispielsweise an einen sogenannten Cloud-Speicher weiterleitet, der die Betriebsdaten speichert. Die im Cloud-Speicher gespeicherten Betriebsdaten können dann mittels eines geeigneten Werkzeugs, beispielsweise mittels eines Web-Browsers, betrachtet und ausgewertet werden.

Das Gerät kann in eine korrespondierende Aufnahme eines Typenschilds des Werkzeugs eingesetzt sein. Häufig weisen motorisch betriebene Werkzeuge über ganze Baureihen hinweg einheitliche Typenschilder auf, so dass mittels Anbringen des Geräts zur Betriebsdatenerfassung im Typenschild des Werkzeugs eine einheitliche, leicht nachrüstbare Lösung zur Verfügung gestellt werden kann, ohne dass die Notwendigkeit besteht, einen Anbringungsort für jeden Werkzeugtyp neu definieren zu müssen. Es kann mittels Weichkomponenten (Dämpfer), schaumartiger Vergussmasse, etc. eine mechanische Entkopplung zwischen Gerät und Werkzeug erfolgen. Das Gerät bzw. sein Gehäuse kann alternativ auf das Werkzeug geklebt werden.

Die Erfindung wird nachfolgend unter Bezugnahme auf die Zeichnungen detailliert beschrieben. Hierbei zeigen:
- Fig. 1: ein schematisches Blockschaltbild eines Systems mit einem Werkzeug und einem Gerät zur Betriebsdatenerfassung des Werkzeugs,
- Fig. 2: ein schematisches Blockschaltbild eines Betriebsdatensensors des in Fig. 1 gezeigten Geräts zur Betriebsdatenerfassung,
- Fig. 3: eine perspektivische Explosionsdarstellung des in Fig. 1 gezeigten Geräts zur Betriebsdatenerfassung und
- Fig. 4: eine perspektivische Darstellung eines Werkzeugs mit Typenschild und darin aufgenommenem Gerät zur Betriebsdatenerfassung.

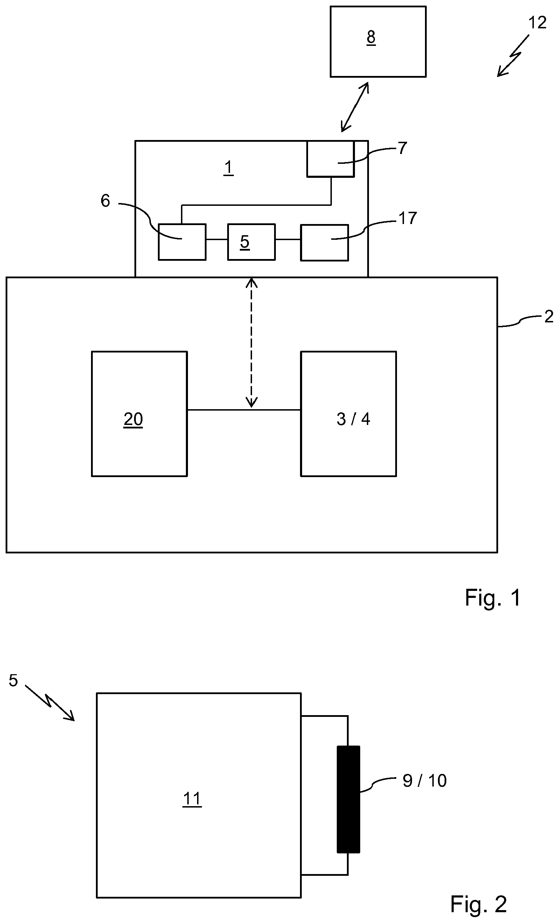

Fig. 1 zeigt ein schematisches Blockschaltbild eines Systems 12 aufweisend ein Werkzeug 2 und ein Gerät 1 zur Betriebsdatenerfassung des Werkzeugs 2.

Das Werkzeug 2, hier exemplarisch eine Motorsäge, weist herkömmlich eine mittels eines Elektromotors 3 oder mittels eines Verbrennungsmotors 4 angetriebene Sägekette 20 auf. Insoweit sei auch auf die einschlägige Fachliteratur verwiesen.

Das Gerät 1 zur Betriebsdatenerfassung des Werkzeugs 2 ist mit dem Werkzeug 2 mechanisch koppelbar bzw. gekoppelt, beispielsweise in ein Typenschild des Werkzeugs 2 eingesetzt.

Das Gerät 1 weist eine Sensoreinheit 5 auf, die dazu ausgebildet ist, drahtlos Betriebsdaten in Form von Betriebsstunden des Werkzeugs 2 zu erfassen.

Das Gerät 1 weist weiter einen flüchtigen Betriebsdatenspeicher 6 auf, in dem die erfassten Betriebsstunden fortlaufend gespeichert werden.

Das Gerät 1 weist weiter einen nicht-flüchtigen Speicher 17 auf, in dem die erfassten Betriebsstunden dann gespeichert werden, sobald sie sich um mehr als einen vorgegebenen Schwellenwert verändert haben. Der nicht-flüchtige Speicher 17 dient folglich als Betriebsstundenzähler, der seinen gespeicherten Betriebsstundenwert auch bei einem Batteriewechsel nicht verliert.

Das Gerät 1 weist weiter eine Kommunikationsschnittstelle 7 in Form einer Bluetooth-Schnittstelle auf, die dazu ausgebildet ist, die erfassten Betriebsstunden fortlaufend und unaufgefordert zu einem Endgerät 8 in Form eines Tablets oder eines Mobiltelefons zu senden.

Bezugnehmend auf Fig. 2 weist die Sensoreinheit 5 einen induktiven Sensor 9 in Form einer Spule auf. Weiter weist die Sensoreinheit 5 eine mit dem induktiven Sensor 9 gekoppelte Auswerteeinrichtung 11 auf, beispielsweise in Form eines Microcontrollers mit integrierten analogen Komponenten, die bzw. der dazu ausgebildet ist, mittels des induktiven Sensors 9 erzeugte Signale auszuwerten, um die Betriebsstunden zu erfassen, d.h. zu erfassen, ob der Elektromotor 3 bzw. der Verbrennungsmotor 4 aktiv ist oder nicht.

Anstelle des oder zusätzlich zum induktiven Sensor 9 kann ein akustischer Sensor 10 verwendet werden.

Bei aktivem Elektromotor 3 bzw. Verbrennungsmotor 4 wird ein sich änderndes magnetisches Feld erzeugt, beispielsweise aufgrund von bewegten Dauermagneten, einer Bewegung eines Schwungrads, und/oder einer Bewegung elektrischer Ladungen (Strom, Zündfunke, etc.).

Das sich ändernde magnetische Feld induziert im induktiven Sensor 9 eine Spannung, die mittels der Auswerteeinrichtung 11 erfasst und ausgewertet werden kann.

Zusätzlich zu der beschriebenen induktiven Kopplung erfolgt typisch auch eine kapazitive Kopplung, da die Wicklungsfläche des induktiven Sensors 9 kapazitiv wirkt, so dass zusätzlich zur Energieübertragung aufgrund magnetischer Kopplung auch eine Energieübertragung aufgrund kapazitiver Kopplung gegeben ist.

Eine Auswertung der mittels des induktiven Sensors 9 erzeugten Signale kann nach einer geeigneten hochohmigen Signalkonditionierung, Filterung mittels eines Hochpasses usw. erfolgen. Eine Weiterverarbeitung der derart konditionierten Signale kann mittels eines Peak-Hold-Glieds und/oder über schnelle Reaktion per Hard- und/oder Software erfolgen.

Bei Werkzeugen mit Verbrennungsmotoren wird die Energieübertragung zum induktiven Sensor 9 typisch durch ein veränderliches Magnetfeld aufgrund von Zündfunken und/oder Schwungrad bewirkt.

Bei Werkzeugen mit netzgespeisten Elektroantrieben erfolgt die Energieübertragung zum induktiven Sensor 9 typisch durch Wechselstrom und Kommutierung der Reihenschlussmotoren.

Bei Werkzeugen mit akkugespeisten Elektroantrieben erfolgt die Energieübertragung zum induktiven Sensor 9 typisch durch pulsierende Gleichspannung (PWM), Wechselströme am Motor, bewegte Permanentmagnete und/oder Kommutierung.

Der induktive Sensor 9 kann als bedrahtete Spule, als eine Induktivität auf einem Chip oder als eine SMD-Spule ausgebildet sein.

Eine Frequenzbandbreite der Anordnung aus induktivem Sensor 9 und Auswerteeinrichtung 11 ist typisch derart gewählt, dass langsame Änderungen des Magnetfelds, die nicht spezifisch für den Betriebszustand des Werkzeugs 2 sind, unterdrückt werden. Die Frequenzbandbreite kann weiter derart gewählt werden, dass hohe Störfrequenzen ebenfalls unterdrückt werden.

Für die Erfassung der mittels des Werkzeugs 2 erzeugten Felder ist eine Flussrichtung der Felder in Bezug auf den induktiven Sensor 9 zu berücksichtigen. Der induktive Sensor 9 kann mehrere einzelne Teilspulen aufweisen, die zueinander unterschiedlich ausgerichtet sind. Weiter kann eine definierte Positionierung des induktiven Sensors 9 an dem Werkzeug 2 bzw. eine definierte Ausrichtung des induktiven Sensors 9 in Bezug auf das Werkzeug 2 gewählt werden.

Die Auswertung der mittels des induktiven Sensors 9 erzeugten Signale kann nach dem Sample-and-hold-Prinzip erfolgen, wobei geeignete elektrische Bauelemente einen Spitzenwert- oder Peak-Detektor realisieren, der einen abgetasteten Signalwert so lange speichert, wie es für das vorgesehene Zeitraster zum Abtasten erforderlich ist.

Ein Microcontroller der Auswerteeinrichtung 11 kann beispielsweise zyklisch aufgeweckt werden und einen gespeicherten Signalwert, beispielsweise in Form einer Spannung, auswerten. Wenn der gespeicherte Spannungswert größer als ein definierter Schwellenwert ist, kann beispielsweise auf ein aktives Werkzeug geschlossen werden und der Betriebsstundenzähler kann entsprechend inkrementiert werden. Nach dem Auswerten kann der gespeicherte Signalwert zurückgesetzt werden.

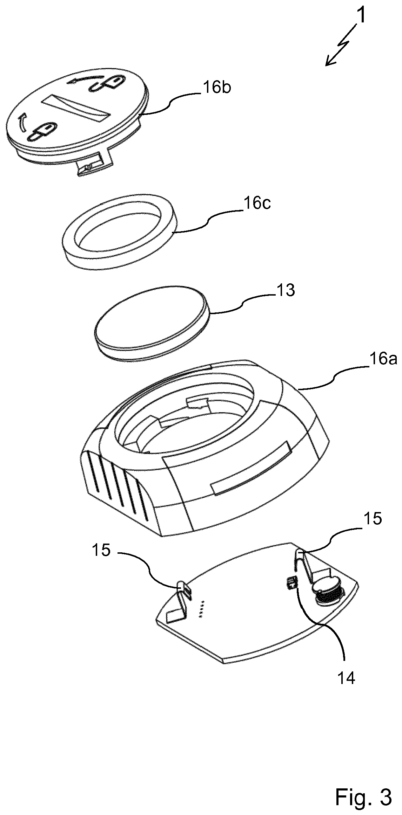

Bezugnehmend auf Fig. 3 weist das Gerät 1 einen elektrischen Energiespeicher 13 in Form einer Knopfzelle auf. Zwei federnde elektrische Kontaktelemente 14, 15 des Geräts 1 sind dazu vorgesehen, korrespondierende elektrische Kontakteflächen des elektrischen Energiespeichers 13 elektrisch zu kontaktieren.

Das Gerät 1 weist weiter ein Gehäuse 16 aus Kunststoff auf, wobei das Gehäuse 16 eine Wanne 16a und einen Deckel 16b aufweist. In einem offenen Zustand des Gehäuses 16 ist der Deckel 16b von der Wanne 16a entfernt. In einem geschlossenen Zustand des Gehäuses 16 verschließt der Deckel 16b die Wanne 16a fluiddicht.

Im offenen Zustand des Gehäuses 16 ist der elektrische Energiespeicher 13 in die Wanne 16a einsetzbar bzw. aus dieser entnehmbar, so dass der elektrische Energiespeicher 13 bei Bedarf ersetzt werden kann.

Das Gehäuse 16 ist derart geformt, dass der elektrische Energiespeicher 13 im geschlossenen Zustand des Gehäuses 16 durch die Formgebung des Gehäuses 16 in Position gehalten bzw. fixiert ist. Die beiden federnden elektrischen Kontaktelemente 14, 15 tragen zur mechanischen Fixierung nicht bei, sondern dienen zur sicheren elektrischen Kontaktierung.

Weiter kann ein optionaler federelastischer Elastomer-Ring 16c als Teil des Gehäuses 16 vorgesehen sein, der im geschlossenen Zustand des Gehäuses 16 zwischen dem Deckel 16b und dem Energiespeicher 13 angeordnet ist und der eine elastische Fixierung des Energiespeichers 13 im Gehäuse 16 ermöglicht.

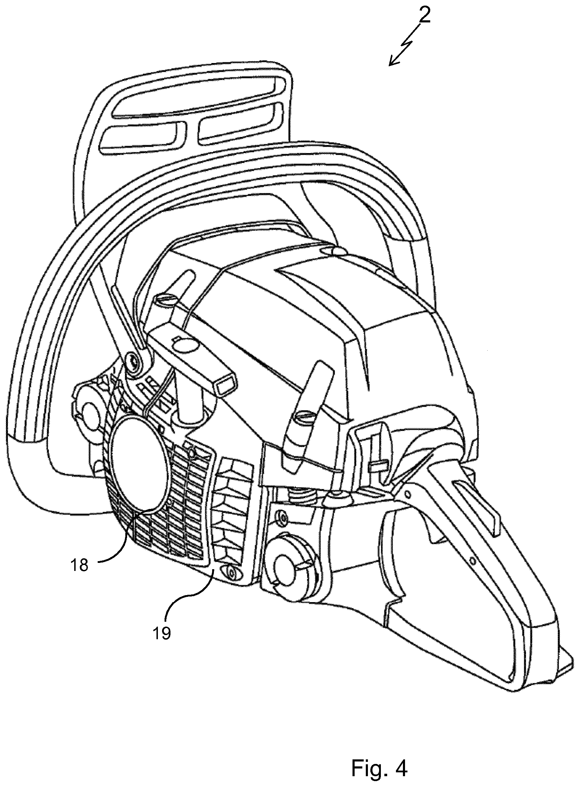

In Fig. 4 ist eine typische Einbausituation des Geräts 1 in das Werkzeug 2 dargestellt. Fig. 4 zeigt ein Typenschild 19 des Werkzeugs 2. Das Gerät 1 ist mit seinem Gehäuse 16 (siehe Fig. 3) in eine korrespondierende Aufnahme 18 des Typenschilds 19 eingesetzt, beispielsweise geclipst. Da derartige Typenschilder 19 üblicherweise identisch für mehrere Werkzeuge verwendet werden, kann auf diese Weise eine universelle Integration des Geräts 1 in unterschiedliche Werkzeugtypen erzielt werden.

Alternativ oder zusätzlich zur Integration des Geräts in ein Werkzeug-Typenschild kann das in Fig. 3 gezeigte Gehäuse 16 als werkzeugunspezifisches Universalgehäuse vorgesehen sein. Zur Anpassung an ein spezifisches Werkzeug kann dann ein gerätespezifisches Adapterelement vorgesehen sein, das eine gerätespezifische mechanische Schnittstelle zur mechanischen Kopplung mit dem Gerät und eine immer gleiche mechanische Schnittstelle zur mechanischen Kopplung mit dem Universalgehäuse aufweist. Auf diese Weise lässt sich ein hoher Gleichanteil an Baugruppen erzielen.

Die Kommunikationsschnittstelle 7 kann die Betriebsdaten im so genannten iBeacon-Format senden. Zu diesem spezifischen Datenformat sei auch auf die einschlägige Fachliteratur verwiesen.

Manche Betriebssysteme von Endgeräten bieten die Möglichkeit, im Hintergrund des Betriebssystems sehr energiesparend nach einer bestimmten Anzahl so genannter Beacon-IDs zu suchen, ohne dass hierzu eine Anwendung aktiv sein muss, die durch fortlaufende Abfragen nach Beacon-IDs von Geräten sucht, die sich in Funkreichweite der Endgeräte befinden.

Das iBeacon-Format ist jedoch aufgrund seiner Spezifikation nicht geeignet, alle im Kontext der Betriebsdatenübertragung notwendigen Informationen zu transportieren.

Um dennoch die im Betriebssystem vorgesehenen energiesparenden Funktionen nutzen zu können, die das iBeacon-Format voraussetzen, kann wie folgt verfahren werden.

Im Zuge der Betriebsdatenübertragung wird regelmäßig ein einzelnes Funktelegramm einer Anzahl m (m = 1, 2, ....) von Funktelegrammen im iBeacon Format gesendet, um eine Detektion des Geräts mittels des Betriebssystems der Endgeräte zu ermöglichen.

In den Funktelegrammen im iBeacon Format sind dann zwar nicht die Betriebsdaten enthalten bzw. kodiert, dafür aber eine ID, die in den Endgeräten bewirkt, dass eine zughörige Applikation (APP) gestartet und gewisse Funktionen durchgeführt werden können.

Zeitlich zwischen den Funktelegrammen im iBeacon Format können dann Funktelegramme in einem proprietären Format gesendet werden, wobei das proprietäre Format dazu geeignet ist, alle im Kontext der Betriebsdatenübertragung notwendigen Informationen zu transportieren, die dann mittels der zuvor gestarteten APP ausgewertet werden können.

## Patentansprüche

1. Gerät (1) zur Erfassung von Betriebsdaten eines Werkzeugs (2), wobei das Werkzeug (2) mittels eines Elektromotors (3) oder eines Verbrennungsmotors (4) angetrieben ist, wobei das Gerät (1) getrennt von dem Werkzeug (2) ausgebildet ist und mit dem Werkzeug (2) koppelbar ist, wobei das Gerät (1) aufweist:
- einen Sensor (9), der dazu ausgebildet ist, drahtlos mindestens eine Messgröße zu erfassen, wobei die Messgröße von einem Betriebszustand des Werkzeugs abhängig ist,
- eine mit dem Sensor (9) gekoppelte Auswerteeinrichtung (11), die dazu ausgebildet ist, die mittels des Sensors erfasste Messgröße auszuwerten, um daraus die Betriebsdaten zu ermitteln,
- einen Betriebsdatenspeicher (6), der dazu ausgebildet ist, die Betriebsdaten zu speichern, und
- eine Kommunikationsschnittstelle (7), die dazu ausgebildet ist, im Betriebsdatenspeicher (6) gespeicherte Betriebsdaten drahtlos zu einem Endgerät (8) zu übertragen,
- die Auswerteeinrichtung (11) dazu ausgebildet ist, Betriebsdaten in Form einer Betriebsdauer des Werkzeugs (2) zu ermitteln, während der der Elektromotor (3) oder der Verbrennungsmotor (4) aktiv ist, **dadurch gekennzeichnet, dass**
- der Betriebsdatenspeicher (6) ein flüchtiger Speicher ist,
- das Gerät (1) weiter einen nicht-flüchtigen Speicher (17) aufweist,
- das Gerät (1) dazu ausgebildet ist, die Betriebsdaten periodisch mit einer Wiederholfrequenz zu erfassen und die ermittelte Betriebsdauer in dem Betriebsdatenspeicher (6) mit der Wiederholfrequenz zu speichern, und
- das Gerät (1) dazu ausgebildet ist, die ermittelte Betriebsdauer in dem nicht-flüchtigen Speicher (17) zu speichern, sobald sich die ermittelte Betriebsdauer um mehr als einen vorgegebenen Schwellenwert verändert hat.

2. Gerät (1) nach Anspruch 1, **dadurch gekennzeichnet, dass**
- der Sensor (9) dazu ausgebildet ist, unabhängig davon, ob das Werkzeug (2) mittels eines Elektromotors (3) oder eines Verbrennungsmotors (4) angetrieben ist, die Messgröße zu erfassen.

3. Gerät (1) nach einem der vorhergehenden Ansprüche, **dadurch gekennzeichnet, dass**
- der Sensor ein induktiver Sensor (9) ist.

4. Gerät (1) nach Anspruch 1 oder 2, **dadurch gekennzeichnet, dass**
- der Sensor ein akustischer Sensor (10) ist.

5. Gerät (1) nach einem der vorhergehenden Ansprüche, **dadurch gekennzeichnet, dass** das Gerät (1) aufweist:
- einen elektrischen Energiespeicher (13),
- federnde elektrische Kontaktelemente (14, 15), die dazu ausgebildet sind, korrespondierende elektrische Kontakte des elektrischen Energiespeichers (13) elektrisch zu kontaktieren, und
- ein Gehäuse (16),
- wobei das Gehäuse (16) einen offenen und einen geschlossenen Zustand aufweist,
- wobei der elektrische Energiespeicher (13) im offenen Zustand des Gehäuses (16) aus dem Gehäuse (16) entnehmbar oder in das Gehäuse (16) einsetzbar ist, und
- wobei das Gehäuse (16) derart geformt ist, dass der elektrische Energiespeicher (13) im geschlossenen Zustand des Gehäuses (16) mittels des Gehäuses (16) in Position gehalten ist.

6. Gerät (1) nach einem der vorhergehenden Ansprüche, **dadurch gekennzeichnet, dass**
- die Kommunikationsschnittstelle (7) dazu ausgebildet ist, die Betriebsdaten fortlaufend drahtlos zu dem Endgerät (8) zu übertragen.

7. System (12), aufweisend:
- ein Gerät (1) nach einem der vorhergehenden Ansprüche, und
- ein Werkzeug (2), das mittels eines Elektromotors (3) oder eines Verbrennungsmotors (4) angetrieben ist.

8. System (12) nach Anspruch 7, **dadurch gekennzeichnet, dass**
- der Elektromotor (3) ein Universalmotor, oder ein bürstenbehafteter Gleichstrommotor, oder ein bürstenloser Gleichstrommotor, oder ein Drehstrommotor ist.

9. System (12) nach Anspruch 7 oder 8, **dadurch gekennzeichnet, dass**
- das Werkzeug (2) eine Motorsäge, oder eine Heckenschere, oder ein Laubbläser, oder ein Laubsauger, oder ein Rasenmäher, oder ein Freischneider ist.

10. System (12) nach einem der Ansprüche 7 bis 9, **dadurch gekennzeichnet, dass**
- das System ein Endgerät (8) aufweist.

11. System (12) nach Anspruch 10, **dadurch gekennzeichnet, dass**
- das Endgerät (8) ein mobiles Endgerät ist.

12. System nach einem der Ansprüche 7 bis 11, **dadurch gekennzeichnet, dass**
- das Gerät (1) in eine korrespondierende Aufnahme (18) eines Typenschilds (19) des Werkzeugs (2) eingesetzt ist.

## Claims

1. Device (1) for capturing operating data of a tool (2), wherein the tool (2) is powered by means of an electric motor (3) or a combustion engine (4), wherein the device (1) is embodied separately from the tool (2) and is able to be coupled to the tool (2), wherein the device (1) comprises:
- a sensor (9), which is configured to wirelessly capture at least one measured variable, wherein the measured variable is dependent on an operating state of the tool,
- an evaluation unit (11) coupled to the sensor (9), said evaluation unit (11) being configured to evaluate the measured variable captured by means of the sensor in order to determine the operating data therefrom,
- an operating data memory (6), which is configured to store the operating data, and
- a communication interface (7), which is configured to wirelessly transmit operating data stored in the operating data memory (6) to a terminal device (8),
- the evaluation unit (11) being configured to determine operating data in the form of an operating time of the tool (2), during which the electric motor (3) or the combustion engine (4) is active,
**characterized in that**
- the operating data memory (6) is a volatile memory,
- the device (1) furthermore comprises a non-volatile memory (17),
- the device (1) is configured to capture the operating data periodically with a repetition frequency and to store the determined operating time in the operating data memory (6) at the repetition frequency, and
- the device (1) is configured to store the determined operating time in the non-volatile memory (17) once the determined operating time has changed by more than a given threshold value.

2. Device (1) according to claim 1, **characterized in that**
- the sensor (9) is configured to capture the measured variable irrespective of whether the tool (2) is powered by means of an electric motor (3) or a combustion engine (4).

3. Device (1) according to any one of the preceding claims, **characterized in that**
- the sensor is an inductive sensor (9).

4. Device (1) according to claim 1 or 2, **characterized in that**
- the sensor is an acoustic sensor (10).

5. Device (1) according to any one of the preceding claims, **characterized in that** the device (1) comprises:
- an electrical energy storage (13),
- resilient electrical contact elements (14, 15), which are configured to make electrical contact with corresponding electrical contacts of the electrical energy storage (13), and
- a housing (16),
- wherein the housing (16) has an open and a closed state,
- wherein the electrical energy storage (13) is removable from the housing (16) or insertable into the housing (16) in the open state of the housing (16), and
- wherein the housing (16) is shaped such that the electrical energy storage (13) is held in position by means of the housing (16) in the closed state of the housing (16).

6. Device (1) according to any one of the preceding claims, **characterized in that**
- the communication interface (7) is configured to wirelessly transmit the operating data continuously to the terminal device (8).

7. System (12), comprising:
- a device (1) according to any one of the preceding claims, and
- a tool (2) which is powered by means of an electric motor (3) or a combustion engine (4).

8. System (12) according to claim 7, **characterized in that**
- the electric motor (3) is a universal motor, or a brushed direct current motor, or a brushless direct current motor, or a three-phase alternating current motor.

9. System (12) according to claim 7 or 8, **characterized in that**
- the tool (2) is a motor saw, or a hedge trimmer, or a leaf blower, or a leaf vacuum device, or a lawnmower, or a brush cutter.

10. System (12) according to any one of claims 7 to 9, **characterized in that**
- the system comprises a terminal device (8).

11. System (12) according to claim 10, **characterized in that**
- the terminal device (8) is a mobile terminal device.

12. System according to any one of claims 7 to 11, **characterized in that**
- the device (1) is inserted into a corresponding receptacle (18) in a type plate (19) of the tool (2).

## Revendications

1. Appareil (1) pour acquérir des données opérationnelles d'un outil (2), l'outil (2) étant entraîné au moyen d'un moteur électrique (3) ou d'un moteur à combustion interne (4), l'appareil (1) étant configuré séparément de l'outil (2) et pouvant être accouplé à l'outil (2), l'appareil (1) possédant :
- un capteur (9), lequel est configuré pour acquérir sans fil au moins une grandeur de mesure, la grandeur de mesure étant dépendante d'un état opérationnel de l'outil,
- un dispositif d'interprétation (11) connecté au capteur (9), lequel est configuré pour interpréter la grandeur de mesure acquise au moyen du capteur afin de déterminer les données opérationnelles à partir de celle-ci,
- une mémoire à données opérationnelles (6), laquelle est configurée pour mémoriser les données opérationnelles, et
- une interface de communication (7), laquelle est configurée pour transmettre sans fil à un terminal (8) les données opérationnelles mémorisées dans la mémoire à données opérationnelles (6),
- le dispositif d'interprétation (11) est configuré pour déterminer les données opérationnelles sous la forme d'une durée de fonctionnement de l'outil (2), pendant laquelle le moteur électrique (3) ou le moteur à combustion interne (4) est actif,
**caractérisé en ce que**
- la mémoire à données opérationnelles (6) est une mémoire volatile,
- l'appareil (1) possède en outre une mémoire non volatile (17),
- l'appareil (1) est configuré pour acquérir périodiquement les données opérationnelles avec une fréquence de répétition et pour mémoriser la durée de fonctionnement déterminée dans la mémoire à données opérationnelles (6) avec la fréquence de répétition, et
- l'appareil (1) est configuré pour mémoriser la durée de fonctionnement déterminée dans la mémoire non volatile (17) dès que la durée de fonctionnement déterminée s'est modifiée de plus d'une valeur de seuil prédéfinie.

2. Appareil (1) selon la revendication 1, **caractérisé en ce que**
- le capteur (9) est configuré pour acquérir la grandeur de mesure indépendamment du fait que l'outil (2) est entraîné au moyen d'un moteur électrique (3) ou d'un moteur à combustion interne (4).

3. Appareil (1) selon l'une des revendications précédentes, **caractérisé en ce que**
- le capteur est un capteur (9) inductif.

4. Appareil (1) selon la revendication 1 ou 2, **caractérisé en ce que**
- le capteur est un capteur acoustique (10).

5. Appareil (1) selon l'une des revendications précédentes, **caractérisé en ce que** l'appareil (1) possède :
- un accumulateur d'énergie électrique (13),
- des éléments de contact (14, 15) électriques à ressort, qui sont configurés pour entrer en contact électrique avec des contacts électriques correspondants de l'accumulateur d'énergie électrique (13), et
- un boîtier (16),
- le boîtier (16) possédant un état ouvert et un état fermé,
- l'accumulateur d'énergie électrique (13), dans l'état ouvert du boîtier (16), pouvant être retiré du boîtier (16) ou pouvant être introduit dans le boîtier (16) et
- le boîtier (16) étant façonné de telle sorte que l'accumulateur d'énergie électrique (13), dans l'état fermé du boîtier (16), est maintenu en position au moyen du boîtier (16).

6. Appareil (1) selon l'une des revendications précédentes, **caractérisé en ce que**
- l'interface de communication (7) est configurée pour transmettre continuellement les données opérationnelles sans fil au terminal (8).

7. Système (12), comprenant :
- un appareil (1) selon l'une des revendications précédentes, et
- un outil (2) qui est entraîné au moyen d'un moteur électrique (3) ou d'un moteur à combustion interne (4).

8. Système (12) selon la revendication 7, **caractérisé en ce que**
- le moteur électrique (3) est un moteur universel, ou un moteur à courant continu à balais, ou un moteur à courant continu sans balais, ou un moteur à courant alternatif triphasé.

9. Système (12) selon la revendication 7 ou 8, **caractérisé en ce que**
- l'outil (2) est une scie à moteur, ou un taillehaie, ou un souffleur de feuilles, ou un aspirateur à feuilles, ou une tondeuse à gazon, ou une débroussailleuse.

10. Système (12) selon l'une des revendications 7 à 9, **caractérisé en ce que**
- le système possède un terminal (8).

11. Système (12) selon la revendication 10, **caractérisé en ce que**
- le terminal (8) est un terminal mobile.

12. Système selon l'une des revendications 7 à 11, **caractérisé en ce que**
- l'appareil (1) est introduit dans un logement (18) correspondant d'une plaque signalétique (19) de l'outil (2) .
